# EUROPÄISCHE PATENTSCHRIFT

(11) **EP 3 963 534 B1**
(45) Veröffentlichungstag und Bekanntmachung des Hinweises auf die Patenterteilung: **15.03.2023**
(21) Anmeldenummer: 20722464.3
(22) Anmeldetag: 27.04.2020
(51) Int. Cl.: G06Q 20/32, G06Q 20/34, G06Q 20/20, G06Q 20/40, G07F 7/08

(54) **VERFAHREN ZUM ZUORDNEN EINES TERMINALS ZU EINER TYPENKLASSE, UND SICHERHEITSELEMENT**
METHOD FOR ASSIGNING A TERMINAL TO A TYPE CLASS, AND SECURITY ELEMENT
PROCÉDÉ D'ASSOCIATION D'UN TERMINAL À UNE CLASSE DE TYPE, ET ÉLÉMENT DE SÉCURITÉ

(30) Priorität: 03.05.2019 DE 102019003153
(43) Veröffentlichungstag der Anmeldung: 09.03.2022
(73) Patentinhaber: Giesecke+Devrient Mobile Security GmbH, 81677 München (DE)
(72) Erfinder: BALDISCHWEILER, Michael, 81825 München (DE); SEEMÜLLER, Klemens, 85386 Echin (DE)
(74) Vertreter: Giesecke + Devrient IP
(86) Internationale Anmeldenummer: PCT/EP2020/025193
(87) Internationale Veröffentlichungsnummer: WO 2020/224802

(56) Entgegenhaltungen:
- EP-A1- 3 109 817
- WO-A1-2018/022459
- CN-A- 109 413 716
- US-A1- 2007 034 691
- US-A1- 2014 089 087

## Beschreibung

Die Erfindung betrifft ein Verfahren zum Zuordnen eines Terminals zu einer Typenklasse. Das Terminal ist zur kontaktlosen Verbindung mit einem Sicherheitselement ausgebildet. Die Erfindung betrifft auch ein dementsprechendes Sicherheitselement.

Sicherheitselemente sind beispielsweise als Chips bzw. integrierte Schaltkreise ausgebildet. Sicherheitselemente können beispielsweise in Sicherheitsdokumenten, beispielsweise Bezahlkarten oder Ausweisdokumenten, integriert sein.

Sicherheitselemente sind aber beispielsweise auch als eSIM (embedded subscriber identity module), eUICC (embedded universal circuit card) oder iUICC (integrated universal circuit card) bekannt.

Terminals sind bekannt als, insbesondere kontaktlos, Lesegeräte für Sicherheitselemente. Mit einem Lesegeräten kann also eine (kontaktlos-)Datenverbindung zu einem Sicherheitselement hergestellt werden, über welche Daten ausgetauscht werden können.

Bekannte Sicherheitselemente kommunizieren mit Terminals, beispielsweise bei einem Bezahlvorgang. Insbesondere können bekannte Sicherheitselemente kontaktlos mit Terminals kommunizieren bzw. Daten oder Kommandos zueinander senden.

Üblicherweise weiß ein Sicherheitselement bei einer, insbesondere kontaktlosen, Kommunikation mit einem Terminal nicht, mit welchem Terminaltyp es kommuniziert. Bei den üblichen Protokollen beispielsweise gemäß der EMV Spezifikation (EMV - Europay International, MasterCard und VISA) wird der Terminaltyp nicht an das Sicherheitselement übertragen.

Tritt bei der Kommunikation zwischen Sicherheitselement und Terminal nun ein Fehler auf, so kann im Nachhinein nur mit dem Sicherheitselement alleine nicht mehr bestimmt werden, mit welchem Terminaltyp die fehlerhafte Kommunikation aufgetreten ist. Die nachträgliche Fehlersuche gestaltet sich demnach schwierig.

Sicherheitselemente werden zum Testen der Kompatibilität mit Terminals üblicherweise Testeinrichtungen bzw. Testinstituten überlassen, welche dann mit einer Vielzahl von Terminals Tests durchführen, um dem Hersteller des Sicherheitselements Information bereitzustellen, mit welchen Terminaltypen eine fehlerhafte Kommunikation auftritt, so dass der Hersteller des Sicherheitselements das Sicherheitselement, insbesondere die Software des Sicherheitselements, zum fehlerfreien Betrieb anpassen kann.

EP 1755091 A1 offenbart ein Verfahren zur Überwachung von mobilen Transaktionen. Observationsdaten eines POS-Geräts werden während einer Transaktion erfasst; basierend darauf werden das Modell und der Typ des Geräts festgestellt.

Aufgabe ist es ein Verfahren und ein Sicherheitselement zu schaffen, bei welchem bzw. mit welchem ein Terminal schneller einer Typenklasse zugeordnet werden kann.

Bei einem erfindungsgemäßen Verfahren wird ein Terminal zu einer Typenklasse zugeordnet. Das Terminal ist zur kontaktlosen Verbindung mit einem Sicherheitselement ausgebildet. Es werden folgende Schritte durchgeführt:
a) Empfangen eines ersten Kommandos des Terminals durch das Sicherheitselement zu einem ersten Zeitpunkt;
b) Empfangen eines zweiten Kommandos des Terminals durch das Sicherheitselement zu einem vom ersten Zeitpunkt unterschiedlichen zweiten Zeitpunkt;
c) Bestimmen einer Zeitdifferenz zwischen dem ersten Zeitpunkt und dem zweiten Zeitpunkt durch das Sicherheitselement;
d) Vergleichen der Zeitdifferenz mit zumindest einer Referenzzeitdifferenz einer Referenzzeitsammlung durch das Sicherheitselement; und
e) Zuordnen des Terminals zu einer Typenklasse, insbesondere zu einem Terminaltyp, anhand des Vergleichs durch das Sicherheitselement.

Der Erfindung liegt die überraschende Erkenntnis zu Grunde, dass sich die Zeitspanne, welche zwischen zwei Kommandos eines Terminals liegt, von Terminaltyp zu Terminaltyp unterscheidet und diese Zeitspanne bzw. die Zeitdifferenz zwischen Kommandos, insbesondere zwischen dem ersten Kommando und dem zweiten Kommando, also charakteristisch für einen Terminaltyp ist und zur Bestimmung des Terminaltyps oder einer Typenklasse, welche beispielsweise mehrere Terminaltypen mit einer gemeinsamen Klasseneigenschaft umfasst, genutzt werden kann.

Durch das erfindungsgemäße Verfahren ist es möglich die Typenklasse des Terminals schneller zu bestimmen. Ferner ist es möglich die Typenklasse des Terminals nur mittels des Sicherheitselements zu bestimmen. Optional sogar ohne, dass das Terminal Kenntnis davon erlangt.

Vorteilhaft ist auch, dass der Typ des Terminals oder die Typenklasse des Terminals vom Sicherheitselement erkannt werden kann, ohne dass das Terminal verändert werden muss oder zusätzliche Kommandos in das Übertragungsprotokoll eingeführt werden müssen.

Die Typenklasse ist beispielsweise durch zumindest eine der folgenden Eigenschaften charakterisiert: Herstellername, Modellklasse, Herstellungsland, Zielnutzungsland, Softwareversion und/ oder Kompatibilitätsinformation.

Das Sicherheitselement ist vorzugsweise als Chip-Modul einer Bezahlkarte, beispielsweise einer Kreditkarte ausgebildet. Das Sicherheitselement kann aber auch in ein mobiles Endgerät, beispielsweise ein Smartphone integriert sein.

Das Terminal ist insbesondere als POS-Terminal (POS - Point of Sale) ausgebildet. Das Terminal kann aber auch als vielfältiges Kontaktlos-Lesegerät ausgebildet sein.

Ein Kommando, also insbesondere das erste Kommando und/oder das zweite Kommando, ist insbesondere ein Befehl, welcher vorzugsweise standardisiert, insbesondere gemäß der ISO/IEC 14443, ist.

Die Referenzzeitsammlung ist beispielsweise als Liste, insbesondere als Datenbank ausgebildet.

Die Zeitdifferenz kann beispielsweise mehrere Millisekunden betragen.

Vorzugsweise ist es vorgesehen, dass als das erste Kommando und/ oder das zweite Kommando eine Suchanfrage des Terminals empfangen wird. Mit der Suchanfrage sucht das Terminal ein Sicherheitselement im Umfeld, um mit diesem einen Kontakt aufzubauen. Die Suchanfrage ist insbesondere als Polling ausgebildet. Polling ist eine zyklische Abfrage, um den Status von Hard- oder Software oder das Ereignis einer Wertänderung zu ermitteln. Vorteilhaft ist die Nutzung der Suchanfrage zur Bestimmung der Zeitdifferenz, da die Suchanfrage des Terminals von dem Sicherheitselement in einfacherweise mitgehört werden kann, ohne dass sich das Sicherheitselement gegenüber dem Terminal zu erkennen geben muss. Das Sicherheitselement kann der, insbesondere zyklischen, Suchanfrage des Terminals auch nur Lauschen und die Zeitdifferenz zwischen den einzelnen Zyklen bestimmen.

Weiterhin vorzugsweise ist es vorgesehen, dass das Sicherheitselement nur auf des erste Kommando und/ oder das zweite Kommando antwortet, falls das Terminal im Schritt e) einer als sicher eingestuften Typenklasse zugeordnet wird. Dadurch kann das Sicherheitselement sicherer betrieben werden, denn das Sicherheitselement kann sich solange versteckt halten, bis es die Vertrauenswürdigkeit des Terminals überprüft hat, und erst dann die zweiseitige Kommunikation mit dem Terminal aufnehmen.

Weiterhin vorzugsweise ist es vorgesehen, dass das Sicherheitselement ein Antwortkommando auf zumindest eines der jeweiligen Kommandos zu einem dritten Zeitpunkt sendet und als Folge auf das Antwortkommando ein drittes Kommando von dem Terminal zu einem vierten Zeitpunkt empfangen wird, wobei eine weitere Zeitdifferenz zwischen dem dritten Zeitpunkt und dem vierten Zeitpunkt bestimmt wird. Durch die weitere Zeitdifferenz kann die anhand der ersten Zeitdifferenz durchgeführte Zuordnung zu einer Typenklasse überprüft werden. Die Zuordnung kann dadurch also zuverlässiger erfolgen.

Weiterhin vorzugsweise ist es vorgesehen, dass die Bestimmung der Zeitdifferenz abhängig von einem sicherheitselementexternen Taktgeber, insbesondere des Terminals, durchgeführt wird. Dadurch kann das Verfahren auch mit einem Sicherheitselement ohne eigenem Taktgeber durchgeführt werden. Weiterhin kann das Verfahren mit weniger Energieverbrauch auf Seiten des Sicherheitselements durchgeführt werden.

Weiterhin vorzugsweise ist es vorgesehen, dass dem Sicherheitselement abhängig von der Zuordnung im Schritt e) eine Zertifizierungsinformation und/ oder eine Zulassungsinformation, insbesondere aus der Referenzzeitsammlung, bereitgestellt wird. Dadurch kann das Sicherheitselement eine Entscheidung treffen, ob überhaupt es sich mit dem Terminal verbinden möchte und falls ja, wie, beispielsweise über welches Protokoll es sich mit dem Terminal verbinden möchte. Das Sicherheitselement kann dadurch sicherer und zuverlässiger betrieben werden.

Weiterhin vorzugsweise ist es vorgesehen, dass der Vergleich im Schritt d) abhängig von der Referenzzeitsammlung, welche extern zum Sicherheitselement ausgebildet ist, durchgeführt wird. Vorteilhaft ist das, da die Referenzzeitsammlung dann keinen Speicherplatz auf dem Sicherheitselement verbraucht. Weiterhin kann die externe Referenzzeitsammlung für mehrere Sicherheitselemente genutzt werden. Es ist dann ausreichend nur noch die externe Referenzzeitsammlung zu aktualisieren und nicht mehr jede lokale Referenzzeitsammlung auf jedem Sicherheitselement einzeln. Die externe Referenzzeitsammlung kann beispielsweise zentral ausgebildet sein oder aber als verteiltes System oder aber als Cloud-Lösung.

Weiterhin vorzugsweise ist es vorgesehen, dass eine Terminalkennung vom Sicherheitselement empfangen wird und anhand der Terminalkennung eine weitere Zuordnung zu einer Typenklasse erfolgt, wobei die weitere Zuordnung mit der Zuordnung aus dem Schritt e) verglichen wird, wobei die Kommunikation mit dem Terminal unterbrochen wird, falls die Zuordnung und die weitere Zuordnung unterschiedlich sind. Dadurch kann überprüft werden, ob die dem Sicherheitselement vom Terminal mitgeteilte Terminalkennung echt ist. Das Sicherheitselement kann dadurch sicherer betrieben werden.

Weiterhin vorzugsweise ist es vorgesehen, dass das erste Kommando und/oder das zweite Kommando während eines kontaktlosen Bezahlvorgangs empfangen wird. Vorteilhaft ist die Durchführung des Verfahrens während eines Bezahlvorgangs, da Bezahlvorgänge ein besonders hohes Schutzbedürfnis aufweisen.

Die Erfindung betrifft auch ein Sicherheitselement. Das erfindungsgemäße Sicherheitselement ist zur kontaktlosen Verbindung mit einem Terminal ausgebildet und eingerichtet, folgende Schritte durchzuführen:
- Empfangen eines ersten Kommandos des Terminals durch das Sicherheitselement zu einem ersten Zeitpunkt;
- Empfangen eines zweiten Kommandos des Terminals durch das Sicherheitselement zu einem vom ersten Zeitpunkt unterschiedlichen zweiten Zeitpunkt;
- Bestimmen einer Zeitdifferenz zwischen dem ersten Zeitpunkt und dem zweiten Zeitpunkt;
- Vergleichen der Zeitdifferenz mit zumindest einer Referenzzeitdifferenz einer Referenzzeitsammlung; und
- Zuordnen des Terminals zu einer Typenklasse, insbesondere zu einem Terminaltyp, anhand des Vergleichs.

Vorzugsweise ist es vorgesehen, dass das Sicherheitselement als Chipmodul einer kontaktlos Chipkarte ausgebildet ist. Bei einem kontaktlosen Verbindungsversuch ist das Sicherheitselement besonders vorteilhaft, da das Terminal von den einzelnen Schritten erst Kenntnis erlangen muss, wenn das Sicherheitselement das Terminal informiert beziehungsweise beispielsweise das Polling des Terminals beantwortet. Bis dahin kann das Sicherheitselement die Schritte vollkommen unerkannt durchführen. Das Terminal muss davon ausgehen, dass sich im Umfeld kein Verbindungspartner, insbesondere kein Sicherheitselement, befindet.

Weiterhin vorzugsweise ist es vorgesehen, dass das Sicherheitselement als Ein-Chip-System eines mobilen Endgeräts ausgebildet ist. Das Ein-Chip-System kann beispielsweise als iUICC oder eSIM ausgebildet sein. Vorteilhaft ist das Ein-Chip-System, da das Sicherheitselement kompakter gebaut werden kann. Weiterhin ist das Ein-Chip-System sicherer, da die Daten des Sicherheitselements für bestimmte Operationen nur innerhalb des Ein-Chip-System transferiert werden müssen. Das mobile Endgerät ist insbesondere als Smartphone, Smartwatch, Wearable oder Tabletcomputer ausgebildet.

Die mit Bezug auf das erfindungsgemäße Verfahren vorgestellten bevorzugten Ausführungsformen und deren Vorteile gelten entsprechend für das erfindungsgemäße Sicherheitselement. Die gegenständlichen Komponenten des erfindungsgemäßen Sicherheitselements sind jeweils dazu ausgebildet, die jeweiligen Schritte des Verfahrens auszuführen.

Weitere Merkmale der Erfindung ergeben sich aus den Ansprüchen, den Figuren und der Figurenbeschreibung.

Ausführungsbeispiele der Erfindung werden nachfolgend anhand einer schematischen Zeichnung näher erläutert.

Dabei zeigen:
- Fig. 1: eine schematische Darstellung eines Ausführungsbeispiels eines erfindungsgemäßen Sicherheitselements;
- Fig. 2: eine schematische Darstellung eines Zeitstrahls mit einem ersten Kommando und einem zweiten Kommando;
- Fig. 3: eine schematische Darstellung eines weiteren Zeitstrahls mit dem ersten Kommando und einem dritten Kommando;
- Fig. 4: einen zeitlichen Ablauf von REQ A und REQ B Signalen, wie sie von einer Chipkarte empfangen werden, sowie den zeitlichen Abstand bzw. eine Zeitdifferenz zwischen zwei Signalen, der durch die Chipkarte ermittelt wird; und
- Fig. 5: empfangene Requests wie in der Fig. 4, wobei die Chipkarte einen alternativen zeitlichen Abstand ermittelt.

In den Figuren werden gleiche oder funktionsgleiche Elemente mit den gleichen Bezugszeichen versehen.

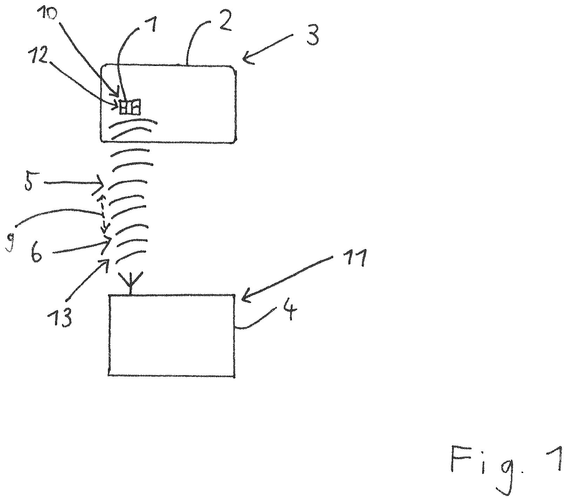

Fig. 1 zeigt ein Sicherheitselement 1. Das Sicherheitselement 1 ist gemäß dem Ausführungsbeispiel als Chipmodul mit einer Antennenanschlussschnittstelle ausgebildet. An die Antennenanschlussschnittstelle ist eine Antenne, vorzugsweise für die Frequenz 13,56 MHz, angeschlossen. Die Antenne kann aber beispielsweise auch für vielfältige weitere Frequenzbereiche zur kontaktlosen Kommunikation ausgebildet sein. Weiterhin ist das Sicherheitselement 1 gemäß dem Ausführungsbeispiel in einen Kartenkörper 2 einer Zahlungskarte 3 eingebettet.

Das Sicherheitselement 1 kann aber auch in einem Internet-der-Dinge (IoT) Gerät, einer Dualinterface-Karte, einem Sticker beziehungsweise einem Aufkleber, einem Kleidungsstück (Wearable) oder einer (Armband-)Uhr eingebettet sein.

Das Sicherheitselement 1 ist zur kontaktlosen Verbindung, insbesondere zu einer NFC-Verbindung (NFC - Near Field Communication) mit einem Terminal 4 ausgebildet.

Das Sicherheitselement 1 empfängt ein erstes Kommando 5 und ein zweites Kommando 6. Das erste Kommando 5 und/ oder das zweite Kommando 6 ist gemäß dem Ausführungsbeispiel insbesondere als ein ISO/IEC 14443 standardkonformes Kommando ausgebildet.

Das erste Kommando 5 und/ oder das zweite Kommando 6 kann aber ergänzend oder alternativ auch gemäß dem ISO/IEC 10536, ISO/IEC 15693 und/ oder ISO/IEC 18000-7 Standard ausgebildet sein.

Das erste Kommando 5 und/ oder das zweite Kommando 6 wird gemäß dem Ausführungsbeispiel insbesondere von dem Terminal 4 ausgesendet.

Das Terminal 4 ist gemäß dem Ausführungsbeispiel als ein Lesegerät ausgebildet. Insbesondere ist das Terminal 4 zum kontaktlosen Lesen des Sicherheitselements 1, vorzugsweise gemäß der EMV Spezifikation, ausgebildet.

Gemäß einem Ausführungsbeispiel läuft das Verfahren nun wie folgt ab. Von dem Sicherheitselement 1 wird das erste Kommando 5 zu einem ersten Zeitpunkt 7 empfangen. Ab dem ersten Zeitpunkt 7 wird eine Zeitmessung oder eine Taktzyklenzählung gestartet. Dann empfängt das Sicherheitselement 1 das zweite Kommando 6 zu einem zweiten Zeitpunkt 8.

Das erste Kommando 5 und/ oder das zweite Kommando 6 kann beispielsweise während einer Suchanfrage, insbesondere eines Pollings, des Terminals 4 vom Terminal 4 erzeugt und ausgesendet werden.

Das erste Kommando 5 und/oder das zweite Kommando 6 kann aber auch ein vielfältiges anderes, vorzugsweise standardkonformes, Kommando sein, welches von dem Terminal 4 ausgesendet wird und von dem Sicherheitselement empfangen wird.

Beispielsweise sind das erste Kommando 5 und das zweite Kommando 6 als "REQ A"-Kommando ausgebildet. Es kann aber auch sein, dass das erste Kommando 5 als "REQ A"-Kommando ausgebildet ist und das zweite Kommando 6 als "REQ B"-Kommando ausgebildet ist.

Anschließend wird eine Zeitdifferenz 9 zwischen dem ersten Zeitpunkt 7 und dem zweiten Zeitpunkt 8 bestimmt. Die Zeitdifferenz 9 kann beispielsweise anhand von Taktzyklen, welche zwischen dem ersten Zeitpunkt 7 und dem zweiten Zeitpunkt 8 liegen, bestimmt werden.

Die Zeitdifferenz 9 wird schließlich mit zumindest einer Referenzzeitdifferenz 10 verglichen. Die Referenzzeitdifferenz 10 ist gemäß dem Ausführungsbeispiel eine Vergleichszeit. Insbesondere ist die Referenzzeitdifferenz 10 schon zu einem früheren Zeitpunkt, beispielsweise in einem Labor, bestimmt worden.

Der Referenzzeitdifferenz 10, insbesondere jede Referenzzeitdifferenz 10 (im Fall des Vergleichs der Zeitdifferenz mit mehreren Referenzzeitdifferenzen 10), ist insbesondere einer Typenklasse 11 oder einem Terminaltyp zugeordnet. Die Zuordnung kann beispielsweise manuell in einem Labor durchgeführt werden oder automatisch anhand von Angaben des Terminalherstellers.

Eine Typenklasse 11 kann aber auch nur einen konkreten Terminaltyp umfassen, wodurch die Typenklasse 11 dann dem Terminaltyp entspricht.

Die Typenklasse 11 umfasst vorzugsweise eine Mehrzahl von Terminaltypen, welche der zumindest einen Typenklasse 11 bzw. den Typenklassen 11 anhand zumindest eines Klassifikationskriteriums, beispielsweise Herstellername, Produktlinie, Frequenzbereich, Protokollstandard, Reichweite, Gewicht, Größe, Ausstattungsmerkmale, Reichweite und/ oder Energieverbrauch, zugeordnet sind.

Die Referenzzeitdifferenz 10 ist in einer Referenzzeitsammlung 12 hinterlegt. Die Referenzzeitsammlung 12 ist beispielsweise als Liste oder als Datenbank ausgebildet.

Die Referenzzeitsammlung 12 kann in dem Sicherheitselement 1 gespeichert sein oder aber zumindest teilweise durch eine extern zum Sicherheitselement 1 ausgebildete Einrichtung, beispielsweise einen Server oder eine Rechnerwolke (Cloud), bereitgestellt werden.

Das Terminal 4 kann auch eine Terminalkennung 13 aufweisen, welche vom Terminal 4 zum Sicherheitselement 1 gesendet wird. Das Sicherheitselement 1 kann die empfangene Terminalkennung 13 dann mit der bestimmten Typenklasse 11 vergleichen und erkennen, ob das Terminal 4 die wahre Terminalkennung ausgegeben hat, oder ob sich das Terminal 4 mit einer falschen Terminalkennung beim Sicherheitselement 1 ausgegeben hat. Bei Erkennen einer falschen Terminalkennung, kann das Sicherheitselement 1 die Verbindung zum Terminal 4 unterbrechen.

Vorzugsweise werden das erste Kommando 6 und/oder das zweite Kommando 7 während eines Bezahlvorgangs 14, beispielsweise an einer Supermarktkasse, empfangen.

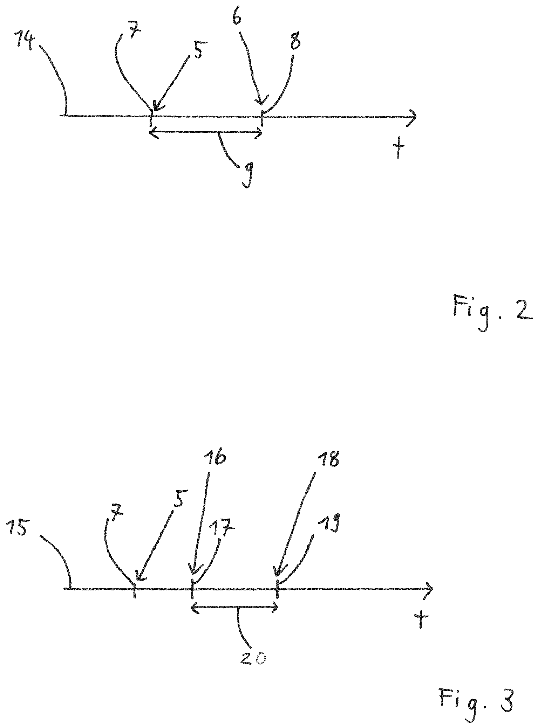

Fig. 2 zeigt einen Zeitstrahl 14 mit einer Zeit t. Auf dem Zeitstrahl 14 ist das erste Kommando 5 zum ersten Zeitpunkt 7 und das zweite Kommando 6 zum zweiten Zeitpunkt 8 aufgetragen. Zwischen dem ersten Kommando 5 und dem zweiten Kommando 6 wird die Zeitdifferenz 9 bestimmt.

Fig. 3 zeigt einen weiteren Zeitstrahl 15 mit der Zeit t. Auf dem Zeitstrahl 15 ist das erste Kommando 5 zum ersten Zeitpunkt 7, ein Antwortkommando 16 des Sicherheitselements 1 zu einem dritten Zeitpunkt 17 und ein drittes Kommando 18 des Terminals 4 zu einem vierten Zeitpunkt 19 aufgetragen. Zwischen dem Antwortkommando 16 und dem dritten Kommando 18 wird analog zur Zeitdifferenz 9 eine weitere Zeitdifferenz 20 bestimmt. Die weitere Zeitdifferenz 20 wird analog zur Zeitdifferenz 9 zur Bestimmung der Typenklasse verwendet. Das zweite Kommando 6 des Terminals 4 muss in diesem Fall nicht zwingend vorliegen.

Weitere Ausführungsbeispiele können beispielswiese wie folgt ausgestaltet sein.

Vorzugsweise vergleicht das Sicherheitselement 1 den zeitlichen Abstand mit einem bekannten terminaltypspezifischen zeitlichen Abstand und ermittelt so den Terminaltyp, wobei der bekannte terminaltypspezifische zeitliche Abstand vorzugsweise auf dem Sicherheitselement selbst oder einem Server, mit dem das Sicherheitselement 1 in Verbindung steht, hinterlegt ist. Bei einer weiteren bevorzugten Ausgestaltung des Verfahrens ermittelt das Sicherheitselement basierend auf einem Start- oder Kommunikationsverhalten des Terminals zur Aufnahme oder Durchführung einer Kommunikation mit dem Sicherheitselement 1, im Rahmen dessen mindestens zwei Signale durch das Sicherheitselement 1 empfangen werden, aus dem zeitlichen Abstand des Empfangs der Signale den Terminaltyp.

Alternative kann das Sicherheitselement 1 eine Kommandoantwort an das Terminal 4 senden, was dem ersten Ereignis entspricht. Nach dem Empfang eines Signals, insbesondere eines darauffolgenden Kommandos, ermittelt es aus dem zeitlichen Abstand zwischen dem Senden der Kommandoantwort und dem Empfang des Signals den Terminaltyp. Auch solche "Antwortzeiten" oder "Bearbeitungszeiten" sind charakteristisch für einen bestimmten Terminaltyp und können somit dazu verwendet werden, einen Terminaltyp zu ermitteln.

Das Sicherheitselement 1 kann mit dem Terminal 4 nach einem genormten Verfahren für die Aufnahme oder Durchführung einer kontaktlosen Kommunikation, insbesondere für kontaktlose Bezahlvorgänge, kommunizieren, wobei die vom Sicherheitselement 1 empfangenen Signale basierend auf dieser Norm übermittelt werden.

Bei einer besonders bevorzugten Ausgestaltung des Verfahrens wird der ermittelte zeitliche Abstand auf dem Sicherheitselement 1 abgespeichert, wobei vorzugsweise der zeitliche Abstand mehrfach hintereinander bestimmt wird, und etwaige Änderungen vorzugsweise ebenfalls auf dem Sicherheitselement 1 abgespeichert werden. Das Speichern kann in einem File-System oder einem Datenbanksystem, welches auf dem Sicherheitselement 1 hinterlegt ist, erfolgen.

Zur Bestimmung des zeitlichen Abstands kann ein Timer des Sicherheitselements 1 mit einem Takt des Terminals 4 betrieben werden.

Auf dem Sicherheitselement 1 oder auf einem Server, mit dem das Sicherheitselement 1 eine Verbindung aufnimmt, ist vorzugsweise eine Liste oder eine Datenbank mit bekannten Terminaltypen hinterlegt, und das Sicherheitselement 1 führt vor dem Durchführen einer Transaktion oder zu Überprüfung einer Zugangsberechtigung einen Vergleich des ermittelten mit den bekannten Terminaltypen durch. Beim Ermitteln eines unbekannten Terminaltyps, oder eine Terminaltyps, für den keine Zulassung für die Transaktion oder keine Freigabe des Zugangs hinterlegt ist, oder für den Fall, das kein Terminaltyp ermittelt werden kann, kann das Sicherheitselement 1 ein Ereignisprotokoll abspeichern und / oder einen Transaktionsstop durchführen oder einen Zugang verweigern.

Vorzugsweise ist das, insbesondere tragbare, Sicherheitselement 1 als Chipkarte ausgebildet. Besonders bevorzugt handelt es sich dabei um eine Proximity-Chipkarte, die nach der ISO/IEC 14443 Norm betrieben wird, wobei diese Norm die Eigenschaften und Funktionsweise von kontaktlosen Chipkarten mit einer Reichweite von ca. 10 cm beschreibt. Eine entsprechende Chipkarte kann auch als Dual-Interface Karte ausgebildet sein, also zur kontaktbehafteten und zur kontaktlosen Kommunikation mit einem Terminal ausgebildet sein. Entsprechende Karten haben eine weite Verbreitung in Form von Kredit- oder Bezahlkarten und vorzugsweise ist daher das Terminal 4 als Point of Sale (POS) Terminal zum bargeldlosen Bezahlen an einem Verkaufsort ausgebildet.

Da in den verwendeten Protokollen dem Hersteller von Terminals mehrere Freiheitsgrade eingeräumt werden, wie das Terminal mit einer Chipkarte in einem Kontaktlosfeld kommuniziert, ist die zeitliche Abfolge von übermittelten Signalen und Kommandos, die vom Terminal 4 an die Chipkarte übermittelt werden, terminaltypspezifisch ausgebildet, wodurch die Chipkarte diese zeitliche Abfolge analysieren und den Terminaltyp ermitteln kann.

In der ISO/IEC 14443 ist festgelegt, wie das Startverhalten für eine Chipkarte durchzuführen ist. Es sind dabei zwei verschiedene Kommunikationsschnittstellen definiert, die mit Typ A und Typ B bezeichnet werden. Diese Normung von zwei unterschiedlichen Verfahren berücksichtigt unterschiedliche technische Konzepte von verschiedenen Herstellern. Während das Terminal im Ruhezustand ("Idle" Zustand) darauf wartet, eine Chipkarte in ihrem Nahfeld zu detektieren, muss es periodisch zwischen den beiden Kommunikationsvarianten umschalten. Hierdurch kann es sowohl Typ-A- wie auch Typ-B-Karten erkennen, wobei es hierzu ein Polling durchführt, indem es zyklisch Typ A und Typ B Requests (REQ A, REQ B) aussendet. Die Chipkarte kann aus einer terminaltypspezifischen zeitlichen Abfolge der Requests den Terminaltyp ermitteln. Im Rahmen der vorliegenden Erfindung wurde also erkannt, dass die ISO/IEC 14443 hier Freiheitsgrade erlaubt, indem sie nicht genau festlegt, wie die zeitliche Abfolge der Requests erfolgt. Da die Hersteller von Terminals in Lesegeräten ihrerseits die Details der zeitlichen Abfolge der Requests für ihre Terminaltypen festlegen, kann die Chipkarte den zeitlichen Abstand der Requests auswerten und daraus einen bestimmten Terminaltyp ermitteln.

Dies bietet den besonderen Vorteil, dass unter Einhaltung der ISO/IEC 14443 Norm und ohne dass die Hersteller Terminals 4 oder Lesegeräte anpassen müssten, die Chipkarte den Terminaltyp ermitteln kann, was eine Fehleranalyse bei einer fehlerhaften Kommunikation zwischen Chipkarte und Terminal wesentlich erleichtert.

Gemäß einer besonders bevorzugten Ausgestaltung der vorliegenden Erfindung empfängt die Chipkarte vom Terminal 4 einen ersten Typ A Request (REQ A) oder einen ersten Typ B Request (REQ B). Nachdem zunächst dieser erste Request empfangen wurde, wird ein weiterer Request des Terminals 4 (gemäß ISO/IEC 14443) von der Karte empfangen. Wenn das Terminal 4 periodisch zwischen den beiden Kommunikationsverfahren umschaltet, wird es einen nächsten Request aussenden, der dem zweiten Kommunikationsverfahren zugeordnet ist. Auf einen REQ A folgt demnach ein REQ B, und umgekehrt. Erfindungsgemäß ermittelt die Chipkarte nun den zeitlichen Abstand zwischen entweder dem ersten Request gemäß dem ersten Kommunikationsverfahren und dem ersten Request gemäß dem zweiten Kommunikationsverfahren (Typ A und Typ B) oder zwischen zwei hintereinander folgenden Request des gleichen Verfahrens. Da dieser zeitliche Abstand zwischen REQ A und REQ B bzw. REQ B und REQ A oder zwischen REQ A und REQ A oder REQ B und REQ B charakteristisch für einen bestimmten Terminaltyp ist, kann die Chipkarte somit den konkreten Terminaltyp identifizieren.

Die Chipkarte ermittelt somit vorzugsweise aus einem zeitlichen Abstand bzw. der Zeitdifferenz 9 zwischen einem, vorzugsweise dem ersten, Typ A Request (REQ A) oder Typ B Request (REQ B) und einem, vorzugsweise dem direkt darauf folgenden, Typ A Request (REQ A) oder Typ B Request (REQ B) den Terminaltyp.

Das Sicherheitselement 1 kann als Chip oder Chipkarte ausgebildet und in ein Mobiltelefon oder in ein anderes tragbares oder fahrbares Gerät integriert oder in dieses eingeführt sein.

Vorzugsweise ist das Terminal 4 als Point of Sale (POS) Terminal zum bargeldlosen Bezahlen an einem Verkaufsort oder zur Überprüfung einer Zugangsberechtigung ausgebildet.

Bei einer weiteren bevorzugten Ausgestaltung des Verfahrens sendet das Terminal 4 im Zuge des Verfahrens eine eindeutige Kennung (ID) an das Sicherheitselement 1. Das Sicherheitselement 1 prüft, ob für diese Kennung auf dem Sicherheitselement 1 selbst oder auf einem Server, mit dem das Sicherheitselement 1 in Verbindung steht, ein terminaltypischer zeitlicher Abstand hinterlegt ist, und vergleicht den ermittelten zeitlichen Abstand mit dem hinterlegten, und führt vorzugsweise nur dann eine Transaktion durch oder gibt dann einen Zugang frei, wenn eine Differenz zwischen dem ermittelten und dem hinterlegten zeitlichen Abstand innerhalb eines festgelegten Korridors liegt.

Dies bietet den Vorteil, dass das vorliegende Verfahren auch zur Verhinderung von Angriffen verwendet werden kann, wenn ein Angreifer mit einem nicht zugelassenen Terminaltyp nicht vorgesehene oder nicht gewünschte Transaktionen zwischen der Chipkarte und seinem Terminal vornehmen will.

Das Sicherheitselement 1 ist vorzugsweise zur Aufnahme einer Kommunikation mit einem Terminal 4 ausgebildet, sowie zum Durchführen eines der vorher beschriebenen Verfahren.

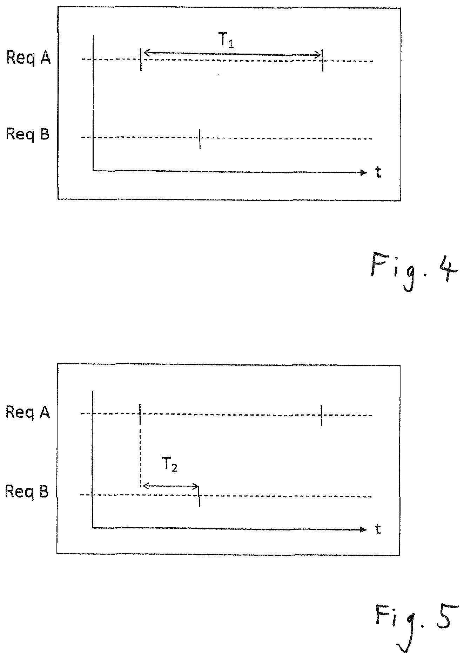

Fig. 4 und 5 zeigen Signale, wie sie nach ISO/IEC 14443 von dem Terminal 4, insbesondere einem Kartenterminal, gesendet und von dem Sicherheitselement 1, insbesondere einer Proximity-Chipkarte, empfangen werden.

Die ISO/IEC 14443 umfasst zwei verschiedene Kommunikationsschnittstellen, welche mit Typ A und Typ B bezeichnet werden. Die ISO/IEC 14443 legt dabei unter anderem fest, wie das Startverhalten für eine Chipkarte durchzuführen ist. Entsprechende Kartenleser pollen im Wechsel Requests nach Typ A und Typ B, die im Folgenden als REQ A und REQ B bezeichnet werden. In den beiden Figuren ist dabei der zeitliche Ablauf dargestellt. Durch das wechselweise Pollen von REQ A und REQ B ist gewährleistet, dass das Terminal 4 sowohl Typ-A- als auch Typ-B-Chipkarten erkennen kann.

Während in der ISO/IEC 14443 verschiedene Randbedingungen für das Startverhalten der Chipkarte und die Kommunikation zwischen Terminal 4 und Chipkarte festgelegt sind, bietet die Norm für Hersteller von Terminals auch mehrere Freiheitsgrade dafür, wie ein Terminal in seinem Kontaktlosfeld nach einer Chipkarte sucht.

In der Fig. 4 ist dargestellt, wie eine Chipkarte zunächst einen REQ A empfängt, gefolgt von einem REQ B. Anschließend erfolgt erneut der Empfang eines REQ A. Der zeitliche Ablauf ist in den Figuren entlang einer horizontalen Zeitachse dargestellt.

Wie in Fig. 4 dargestellt, ermittelt die Chipkarte gemäß eines ersten erfindungsgemäßen Verfahrens zunächst ein Zeitintervall T1 zwischen dem Empfang eines, vorzugsweise des ersten REQ A, und dem Empfang eines darauf folgenden, vorzugsweise des nächsten REQ A. Bei dem verwendeten Terminal, welches mit der Chipkarte in Verbindung tritt, dauert es vom Empfang des ersten REQ A durch die Chipkarte bis zum Empfand des nächsten REQ A beispielsweise 15 ms. Diese zeitliche Abfolge, also der zeitliche Abstand eines folgenden REQ A gegenüber dem vorherigen REQ A, ist ein charakteristisches Merkmal für einen bestimmten Terminaltyp, sodass aus dem ermittelten zeitlichen Abstand T1 die Chipkarte den Terminaltyp ermitteln kann.

Ein alternatives Vorgehen ist in der Fig. 5 dargestellt. Auch hier empfängt eine Chipkarte zunächst einen REQ A Request, gefolgt von einem REQ B und einem weiteren REQ A, der nach dem REQ B empfangen wird. Im Gegensatz zu dem in der Figur 1 dargestellten Verfahren ermittelt die Chipkarte nun den Abstand zwischen dem zuerst empfangene REQ A und dem als nächsten empfangenen REQ B. Ebenso wie der Abstand zwischen Request des gleichen Kommunikationstyp ist auch der Abstand zwischen den Requests unterschiedlicher Kommunikationstypen (Typ-A und Typ-B) wiederum charakteristisch für einen bestimmten Terminaltyp, sodass auch hier die Chipkarte durch die Messung der Zeitspanne T2 den Terminaltyp ermitteln kann, mit dem sie in Verbindung getreten ist.

Beim zeitlichen Ablauf gemäß der Fig. 5 kann der zeitliche Abstand T2 vom Start des REQ A zum Start des REQ B beispielsweise 7 ms betragen.

Diese Zeiten T1 und T2 sind einem bestimmten Terminaltyp eindeutig zuordenbar, da diese von der internen Firmware des Terminals, beispielsweise eines POS-Terminals (Point of Sale-Terminal) erzeugt werden. Diese Zeiten T1 und T2 (Poll-Intervalle) lassen sich mit einer Dual Interface oder Contactless-Chipkarte einfach bestimmen. Dabei wird die Chipkarte zunächst ins Nahfeld des Terminals gehalten. Üblicherweise wird die Chipkarte beim ersten empfangenen REQ A bzw. REQ B mit der internen Kommandoabarbeitung beginnen. Entsprechend des erfindungsgemäßen Verfahrens startet die Chipkarte allerdings zunächst eine Zeitmessung, wobei der verwendete Timer der Chipkarte mit dem externen Takt des Terminals oder Lesers betrieben wird. In einem ersten Schritt ermittelt nun die Chipkarte die Zeitintervalle T1 oder T2 zwischen den einzelnen Poll-Intervallen. Vorzugsweise werden diese Zeitabstände mehrfach ermittelt, um sicherzustellen, dass sich das Timing nicht ändert. Wird eine Änderung des Timings erkannt, so wird auch diese abgespeichert ebenso wie die ermittelten Zeitintervalle T1 bzw. T2 zwischen dem Empfang von REQ A Requests bzw. zwischen dem Empfang des REQ A und des REQ B Request.

Neben der Bestimmung der zeitlichen Abstände zwischen festgelegten REQ A und REQ B Requests bietet das Kommunikationsprotokoll nach ISO/IEC 14443 noch weitere Möglichkeiten, über Zeitmessungen einen Terminaltyp ermitteln. Nach dem "Polling", also dem periodischen Wechsel zwischen Typ-A und Typ-B Kommunikation und dem Erkennen der vorliegenden Chipkarte, verbleibt das Terminal 4 in dem entsprechenden Kommunikationsverfahren.

Neben dem Polling ist in der ISO/IEC 14443 auch festgelegt, dass ein anschließendes Antikollisionsverfahren zur Selektion einer einzelnen Karte durchlaufen werden muss, um zu verhindern, dass Kommunikation mit zwei Chipkarten gleichzeitig aufgenommen wird. Hierzu wird ein ANTICOLLISION Kommando versendet.

Sofern das Terminal 4 erkennt, dass sich die mindestens eine Karte im Arbeitsbereich befindet, startet sie neben dem oben erwähnten Antikollisionsverfahren auch das Verfahren zum Lesen der Identifikationsnummer der Chipkarte durch Senden eines SELECT-Kommandos. Hat das Terminal die vollständige Identifikationsnummer erhalten, sendet es ein SELECT-Kommando an diese Identifikationsnummer. Die Karte mit der entsprechenden Nummer bestätigt dieses Kommando mit dem SELECT ACKNOWLEDGE (SAC) und wechselt in den ACTIVE-Status. Im ACTIVE-Status kann die Karte nur mit Protokollen höherer Schichten kommunizieren. Nach dem Empfang des SAC (SELECT ACKNOWLEDGE), das im Ende der Antikollisionsschleife von der Karte gesendet wurde, sendet das Terminal ein RATS-Kommando (Request for Answer To Select) an die Karte. Auch der zeitliche Ablauf bzw. der Abstand zwischen RATS-Kommando und die von der Karte zurückgeschickte ATS (Answer To Select) können im entsprechenden vorliegenden Verfahren dazu verwendet werden, den Terminaltyp zu identifizieren, da die entsprechenden zeitlichen Abstände Terminaltypspezifischer Art sind.

Nach dem Senden des ATS befindet sich die Karte in der Isoschicht 7. Auch hier hat die Chipkarte die Möglichkeit, den zeitlichen Abstand zwischen Antworten der Karte und dem Empfang des nächsten Kommandos vom Terminal zu ermitteln (z.B. Senden eines SWTX-Response und Empfang eines SWTX-Request).

Jedes der oben aufgeführten Kommandos erlaubt es der Chipkarte über die detektierten zeitlichen Abläufe und / oder Bearbeitungszeiten (Zeitdifferenz Kommandoantwort gesendet / nächstes Kommando empfangen) den Terminaltyp zu ermitteln, mit dem sie in Verbindung getreten ist.

Um eine Bestimmung durchführen zu können, werden die Daten vorzugsweise auf der Chipkarte in einem File-System oder in einer Datenbank abgespeichert.

Im Falle einer sogenannten Connected Chipkarte kann eine Abfrage mit einer entfernten Serverinstanz stattfinden, mit dem die Chipkarte verbunden ("connected") ist. Eine entsprechende Datenbank oder Liste von bekannten Terminaltypen kann auch Zertifizierungs- oder Zulassungsinformationen enthalten, welche die Chipkarte auswertet.

Für den Fall, dass die Chipkarte einen Terminaltyp nicht identifizieren kann, als Terminaltyp also beispielsweise "unbekannt" ermittelt wird, kann vorgesehen sein, dass die Chipkarte die Kontaktlos-Transaktion abbricht, also einen Transaktionsstopp durchführt. Alternativ oder ergänzend können die entsprechenden Daten in einem zusätzlichen Eintrag abgespeichert und mit "neu" vermerkt werden. Entsprechende Daten können an das Hintergrundsystem des Providers oder der Bank gesendet werden, um eine Verifikation durchführen zu können.

Mit dem erfindungsgemäßen Verfahren kann somit eine Chipkarte einen Terminaltyp eines Terminals, mit dem sie in Verbindung steht, identifizieren, und bei Bedarf auch den Zulassungsstatus des Terminal überprüfen. Somit bietet das erfindungsgemäße Verfahren nicht nur den Vorteil, dass auftretende Fehler in der Kommunikation zwischen Chipkarte und Terminal besser analysiert werden können, sondern auch Angriffe können erkannt und abgewehrt werden. Dies kann nicht nur durch eine Prüfung des Zulassungsstatus des Terminals erfolgen, sondern es kann auch ein "Man of the Middle" Angriff erkannt werden, wenn das überprüfte und analysierte Timing-Verhalten beispielsweise während des Pollings oder auch in einer höheren ISO/IEC 14443 Schicht komplett anders abläuft als vorgesehen. Weiterhin kann ein Betrieb an einem nicht zugelassenen Terminal gelogged werden.

## Patentansprüche

1. Verfahren zum Zuordnen eines Terminals (4) zu einer Typenklasse, welches zur kontaktlosen Verbindung mit einem Sicherheitselement (1) ausgebildet ist, bei welchem folgende Schritte durchgeführt werden:
a) Empfangen eines ersten Kommandos (5) des Terminals (4) durch das Sicherheitselement (1) zu einem ersten Zeitpunkt (7);
b) Empfangen eines zweiten Kommandos (6) des Terminals (4) durch das Sicherheitselement (1) zu einem vom ersten Zeitpunkt (7) unterschiedlichen zweiten Zeitpunkt (8);
c) Bestimmen einer Zeitdifferenz (9) zwischen dem ersten Zeitpunkt (7) und dem zweiten Zeitpunkt (8) durch das Sicherheitselement (1);
d) Vergleichen der Zeitdifferenz (9) mit zumindest einer Referenzzeitdifferenz (10) einer Referenzzeitsammlung (12) durch das Sicherheitselement (1); und
e) Zuordnen des Terminals (4) zu einer Typenklasse anhand des Vergleichs durch das Sicherheitselement (1).

2. Verfahren nach Anspruch 1, wobei
als das erste Kommando (5) und/ oder das zweite Kommando (6) eine Suchanfrage des Terminals (4) empfangen wird.

3. Verfahren nach Anspruch 1 oder 2, wobei
das Sicherheitselement (1) nur auf des erste Kommando (5) und/oder das zweite Kommando (6) antwortet, falls das Terminal (4) im Schritt e) einer als sicher eingestuften Typenklasse zugeordnet wird.

4. Verfahren nach einem der vorhergehenden Ansprüche, wobei
das Sicherheitselement (1) ein Antwortkommando auf zumindest eines der jeweiligen Kommandos (5, 6) zu einem dritten Zeitpunkt (17) sendet und als Folge auf das Antwortkommando ein drittes Kommando (18) von dem Terminal (4) zu einem vierten Zeitpunkt (19) empfangen wird, wobei eine weitere Zeitdifferenz (20) zwischen dem dritten Zeitpunkt (17) und dem vierten Zeitpunkt (19) bestimmt wird.

5. Verfahren nach einem der vorhergehenden Ansprüche, wobei
die Bestimmung der Zeitdifferenz (9) abhängig von einem sicherheitselementexternen Taktgeber durchgeführt wird.

6. Verfahren nach einem der vorhergehenden Ansprüche, wobei
dem Sicherheitselement (1) abhängig von der Zuordnung im Schritt e) eine Zertifizierungsinformation und/ oder eine Zulassungsinformation bereitgestellt wird.

7. Verfahren nach einem der vorhergehenden Ansprüche, wobei
der Vergleich im Schritt d) abhängig von der Referenzzeitsammlung (12), welche extern zum Sicherheitselement (1) ausgebildet ist, durchgeführt wird.

8. Verfahren nach einem der vorhergehenden Ansprüche, wobei
eine Terminalkennung vom Sicherheitselement (1) empfangen wird und anhand der Terminalkennung eine weitere Zuordnung zu einer Typenklasse erfolgt, wobei die weitere Zuordnung mit der Zuordnung aus dem Schritt e) verglichen wird, wobei die Kommunikation mit dem Terminal (4) unterbrochen wird, falls die Zuordnung und die weitere Zuordnung unterschiedlich sind.

9. Verfahren nach einem der vorhergehenden Ansprüche, wobei
das erste Kommando (5) und/ oder das zweite Kommando (6) während eines kontaktlosen Bezahlvorgangs empfangen wird.

10. Sicherheitselement (1), welches zur kontaktlosen Verbindung mit einem Terminal (4) ausgebildet ist und eingerichtet ist, folgende Schritte durchzuführen:
- Empfangen eines ersten Kommandos (5) des Terminals (4) durch das Sicherheitselement (1) zu einem ersten Zeitpunkt (7);
- Empfangen eines zweiten Kommandos (6) des Terminals (4) durch das Sicherheitselement (1) zu einem vom ersten Zeitpunkt (7) unterschiedlichen zweiten Zeitpunkt (8);
- Bestimmen einer Zeitdifferenz (9) zwischen dem ersten Zeitpunkt (7) und dem zweiten Zeitpunkt (8);
- Vergleichen der Zeitdifferenz (9) mit zumindest einer Referenzzeitdifferenz (10) einer Referenzzeitsammlung (12); und
- Zuordnen des Terminals (4) zu einer Typenklasse anhand des Vergleichs.

11. Sicherheitselement (1) nach Anspruch 10, wobei
das Sicherheitselement (1) als Chipmodul einer kontaktlos Chipkarte ausgebildet ist.

12. Sicherheitselement (1) nach Anspruch 10, wobei
das Sicherheitselement (1) als Ein-Chip-System eines mobilen Endgeräts ausgebildet ist.

## Claims

1. A method for assigning a terminal (4) to a type class, which is configured for a contactless connection to a security element (1), in which the following steps are carried out:
a) receiving a first command (5) of the terminal (4) by the security element (1) at a first point in time (7);
b) receiving a second command (6) of the terminal (4) by the security element (1) at a second point in time (8) different from the first point in time (7);
c) determining a time difference (9) between the first point in time (7) and the second point in time (8) by the security element (1);
d) comparing the time difference (9) with at least one reference time difference (10) of a reference time collection (12) by the security element (1); and
e) assigning the terminal (4) to a type class on the basis of the comparison by the security element (1).

2. The method according to claim 1, wherein a search query of the terminal (4) is received as the first command (5) and/or the second command (6).

3. The method according to claim 1 or 2, wherein the security element (1) responds only to the first command (5) and/or the second command (6) if the terminal (4) is assigned to a type class classified as secure in step e).

4. The method according to any of the preceding claims, wherein the security element (1) sends a response command to at least one of the respective commands (5, 6) at a third point in time (17) and, as a result of the response command, a third command (18) is received from the terminal (4) at a fourth point in time (19), wherein a further time difference (20) between the third point in time (17) and the fourth point in time (19) is determined.

5. The method according to any of the preceding claims, wherein the determination of the time difference (9) is carried out depending on a clock generator external to the security element.

6. The method according to any of the preceding claims, wherein the security element (1) is provided with a certification information and/or an admission information depending on the assignment in step e).

7. The method according to any of the preceding claims, wherein the comparison in step d) is carried out depending on the reference time collection (12) which is configured externally to the security element (1).

8. The method according to any of the preceding claims, wherein a terminal identifier is received by the security element (1) and a further assignment to a type class is effected on the basis of the terminal identifier, wherein the further assignment is compared with the assignment from step e), wherein the communication with the terminal (4) is interrupted if the assignment and the further assignment are different.

9. The method according to any of the preceding claims, wherein the first command (5) and/or the second command (6) is/are received during a contactless payment process.

10. A security element (1) which is configured for a contactless connection to a terminal (4) and is set up to carry out the following steps:
- receiving a first command (5) of the terminal (4) by the security element (1) at a first point in time (7);
- receiving a second command (6) of the terminal (4) by the security element (1) at a second point in time (8) different from the first point in time (7);
- determining a time difference (9) between the first point in time (7) and the second point in time (8);
- comparing the time difference (9) with at least one reference time difference (10) of a reference time collection (12); and
- assigning the terminal (4) to a type class on the basis of the comparison.

11. The security element (1) according to claim 10, wherein the security element (1) is configured as a chip module of a contactless chip card.

12. The security element (1) according to claim 10, wherein the security element (1) is configured as a system-on-chip of a mobile end device.

## Revendications

1. Procédé d'association d'un terminal (4) à une classe de type, ledit terminal étant réalisé pour la liaison sans contact avec un élément de sécurité (1), dans lequel les étapes suivantes sont effectuées :
a) réception d'une première commande (5) du terminal (4) par l'élément de sécurité (1) à un premier moment (7) ;
b) réception d'une deuxième commande (6) du terminal (4) par l'élément de sécurité (1) à un deuxième moment (8), différent du premier moment (7) ;
c) détermination d'une différence de temps (9) entre le premier moment (7) et le deuxième moment (8) par l'élément de sécurité (1) ;
d) comparaison de la différence de temps (9) avec au moins une différence de temps de référence (10) d'une collection de temps de référence (12) par l'élément de sécurité (1) ; et
e) association du terminal (4) à une classe de type à l'aide de la comparaison par l'élément de sécurité (1).

2. Procédé selon la revendication 1, cependant que
en tant que la première commande (5) et/ou la deuxième commande (6), une demande de recherche du terminal (4) est reçue.

3. Procédé selon la revendication 1 ou 2, cependant que
l'élément de sécurité (1) ne répond qu'à la première commande (5) et/ou à la deuxième commande (6) dans le cas où le terminal (4) est associé à l'étape e) à une classe de type classifiée comme sûre.

4. Procédé selon une des revendications précédentes, **caractérisé en ce que**
l'élément de sécurité (1) envoie à un troisième moment (17) une commande de réponse à au moins un des commandes (5, 6) respectives, et, suite à cela, en réaction à la commande de réponse, une troisième commande (18) est reçue par le terminal (4) à un quatrième moment (19), cependant qu'une autre différence (20) entre le troisième moment (17) et le quatrième moment (19) est déterminée.

5. Procédé selon une des revendications précédentes, cependant que
la détermination de la différence de temps (9) est effectuée en fonction d'une horloge externe à l'élément de sécurité.

6. Procédé selon une des revendications précédentes, cependant que, à l'élément de sécurité (1), en fonction de l'association à l'étape e), une information de certification et/ou une information d'autorisation est mise à disposition.

7. Procédé selon une des revendications précédentes, cependant que la comparaison à l'étape d) est effectuée en fonction de la collection de temps de référence (12), laquelle est réalisée de manière externe à l'élément de sécurité (1).

8. Procédé selon une des revendications précédentes, cependant qu'un identifiant de terminal est reçu par l'élément de sécurité (1) et, à l'aide de l'identifiant de terminal, une autre association à une classe de type a lieu, cependant que l'autre association est comparée avec l'association de l'étape e), cependant que la communication avec le terminal (4) est interrompue dans le cas où l'association et l'autre association sont différentes.

9. Procédé selon une des revendications précédentes, cependant que
la première commande (5) et/ou la deuxième commande (6) est reçue pendant une opération de paiement sans contact.

10. Elément de sécurité (1) réalisé pour la liaison sans contact avec un terminal (4) et équipé pour effectuer les étapes suivantes :
- réception d'une première commande (5) du terminal (4) par l'élément de sécurité (1) à un premier moment (7) ;
- réception d'une deuxième commande (6) du terminal (4) par l'élément de sécurité (1) à un deuxième moment (8), différent du premier moment (7) ;
- détermination d'une différence de temps (9) entre le premier moment (7) et le deuxième moment (8);
- comparaison de la différence de temps (9) avec au moins une différence de temps de référence (10) d'une collection de temps de référence (12) ; et
- association du terminal (4) à une classe de type à l'aide de la comparaison.

11. Elément de sécurité (1) selon la revendication 10, cependant que
l'élément de sécurité (1) est réalisé sous forme de module puce d'une carte à puce sans contact.

12. Elément de sécurité (1) selon la revendication 10, cependant que l'élément de sécurité (1) est réalisé sous forme d'un système monopuce d'un terminal mobile.
